# DEMANDE DE BREVET EUROPEEN

(11) **EP 2 810 760 A2**
(43) Date de publication de la demande: **10.12.2014**
(21) Numéro de dépôt: 14171409.7
(22) Date de dépôt: 05.06.2014
(51) Int. Cl.: B29C 45/37, B29C 33/42, G03F 7/00, B29L 31/00

(54) **Procédé de fabrication d'inserts de moules difficilement reproductibles, inserts et pièces plastiques fabriquées selon ce procédé**

(30) Priorité: 05.06.2013 FR 1301274
(71) Demandeur: Mimotec S.A., 1950 Sion (CH); PEP Centre Technique de la Plasturgie et des Composites, 0170 Oyonnax Cedex (FR)
(72) Inventeur: Lorenz, Hubert, 1965 Savièse (CH); Genolet, Grégoire, 1926 Fully (CH); Moguedet, Mael, 01100 Oyonnax (FR)
(74) Mandataire: P&TS SA (AG, Ltd.)

(57) **Abrégé**

Insert électroformé pour moule destiné à la fabrication de pièces plastiques comportant à la fois au moins un motif diffractif obtenu par nanostructuration et au moins une structure micrométrique fine obtenue par photolithographie épaisse.

## Description

### Domaine technique

La présente invention concerne la fabrication de moules pour fabriquer des pièces mécaniques difficilement reproductibles. La présente invention concerne en particulier la fabrication de pièces protégées par des éléments masqués.

### Etat de la technique

Dans de nombreux domaines de fabrication, il est nécessaire de fabriquer des pièces difficiles à reproduire par un faussaire ou un contrefacteur. La contrefaçon ne touche pas que le luxe ; même des domaines tels que l'automobile sont atteints et les faussaires n'hésitent pas à proposer des fausses pièces de rechange, y compris des pièces plastiques ou métalliques de grandes dimensions tels que les pare-chocs, les éléments de carrosserie, etc. De telles copies occasionnent fréquemment des problèmes de sécurité. La qualité des copies est parfois telles qu'il est difficile de les distinguer à l'oeil nu ou sans test destructif des originaux.

Différentes techniques existent afin de rendre un objet difficile à reproduire. Des techniques d'impression sophistiquées sont utilisées par exemple pour protéger des billets de banque ou des timbres-poste. Ces techniques d'impression sont difficiles à appliquer sur des pièces métalliques, notamment des pièces plastiques ou métalliques de grande taille, des pièces injectées, des pièces soumises à une usure ou dont l'aspect esthétique ne doit pas être altéré. L'usage de composants électroniques, par exemple de transpondeurs RFID, est également largement répandu, mais pose le problème de la liaison inamovible entre le transpondeur et l'objet à protéger, et la difficulté à cacher complètement le transpondeur sur certaines pièces. D'autres techniques mettent en oeuvre par exemple l'utilisation d'un motif de bulles aléatoire et unique apposé sur les produits.

On connait également des exemples de pièces horlogères protégées par des motifs de lignes gravées supposées difficiles à reproduire. Toutefois, des artisans spécialisés dans le guillochage, ou des machines de guillochage modernes, parviennent souvent à reproduire des motifs complexes, même lorsqu'il s'agit de fabriquer un nombre de reproductions limité.

On connait également des techniques de protection par hologrammes de sécurité ou plus récemment par marquage « covert laser readable » (CLR). Il s'agit dans les deux cas de modifier l'aspect tridimensionnel de la surface d'un élément afin de faire apparaitre un motif lorsqu'un flux de lumière cohérente atteint la surface modifiée. La technologie CLR offre notamment l'avantage de nécessiter uniquement la modification d'une très petite surface pour faire apparaitre un motif parfaitement visible sous certaines conditions d'illumination. Elle est notamment utilisée sur des étiquettes ou des emballages de produits à protéger contre la contrefaçon.

US20100294146 décrit un procédé de fabrication de timbre nanostructuré pour la protection d'objets contre la contrefaçon.

US20090162756 décrit un procédé de fabrication d'un hologramme volumique utilisé pour l'authentification d'objets et la sécurité.

EP1297491B1 décrit une structure diffractive utilisée pour protéger un dispositif contre la contrefaçon. La structure diffractive n'est pas réalisée par LIGA.

JP2005345319 décrit un sceau holographique pour la protection des parties externes d'une montre contre la contrefaçon.

WO2011/031047 concerne un procédé de création d'un timbre muni d'un micro-motif pour moulage à injection. Le but est ici de fabriquer des structures décoratives, similaires à des hologrammes, pour des appareils électroménagers. Le procédé comprend une étape de formation d'un micro-motif sur un substrat, et une étape d'application d'une plaque métallique afin de transférer le motif sur la plaque qui servira ensuite pour le moulage. Le substrat peut être fabriqué par exemple par un procédé LIGA ou par d'autres procédés équivalents. Le procédé LIGA permet de réaliser des motifs avec une résolution latérale typique de l'ordre de quelques microns et de quelques dizaines de microns en épaisseur. Les dimensions des détails les plus fins qui peuvent être produits se situent donc dans le domaine du visible. Ce procédé permet donc de réaliser un hologramme ou un autre motif sans irisation. En raison de la résolution modérée, ce procédé ne convient cependant pas pour fabriquer des structures avec des motifs plus fins que la résolution de l'oeil. En particulier, le procédé comprend l'application d'une couche de photoresist sur un substrat, dont l'épaisseur détermine l'épaisseur finale des motifs obtenus. Il est cependant difficile ou impossible de contrôler avec précision l'épaisseur de la couche de résine déposée. Par conséquent, il est difficile ou impossible de contrôler l'épaisseur des motifs produits avec ce procédé.

Comme on le verra, il serait cependant avantageux de disposer d'un procédé de fabrication de pièces permettant de contrôler l'épaisseur et les autres dimensions des structures produites avec une précision de l'ordre de quelques nanomètres ; en effet une telle précision permettrait de réaliser des structures avec des dimensions correspondant à la longueur d'onde de la lumière visible, ou au quart de la longueur d'onde de la lumière visible, et donc de réaliser des structures d'interférence impossibles à réaliser avec la technologie de WO2011/031047.

La résolution des motifs réalisés avec le procédé LIGA de WO2011/031047 étant importante, la surface totale de la structure nécessaire pour afficher un texte ou un logo imprimé avec cette technologie doit donc être relativement importante. Ce procédé ne convient donc pas ou difficilement au marquage de pièces mécaniques de petites dimensions, par exemple au marquage de pièce fonctionnelles en microtechniques telle qu'un composant horloger.

WO2010/085052 concerne un autre procédé de création de micro-motif pour un appareil ménager. Le procédé décrit permet de réfléchir différentes longueurs d'ondes ou couleurs de lumière du micro-motif en fonction de l'angle d'incidence de l'éclairage. Ce document prévoit l'application d'une couche de nickel ou de cuivre suivie d'un électroformage : il n'y a pas d'illumination ni de photomasque à cette étape. A nouveau, l'épaisseur des motifs produits dépend de l'épaisseur d'une couche sensible à la lumière, qui est impossible à contrôler avec une précision nanométrique.

Le document « the LIGA Technique and its Potential for Microsystems », de W. Bacheret al., publié en Allemagne le 05.09.1994 concerne la technologie LIGA en tant que telle, et plus particulièrement certains avantages inhérents à cette technologie.

Le document « Tailoring of surface properties byremoval and deposition with laser radiation », de E.W. Kreutz et al., publié en Allemagne le 01.02.1995, décrit une pluralité de méthodes utilisant la photolithographie par laser. En outre, l'exemple présenté en relation avec un masque comporte l'utilisation d'un seul masque.

Le document « Fabrication of submicron metallic grids with interferance and phase-mask holography », de Joong-Mok Park et al., publié le 01.01.2011, décrit un mode de réalisation de grille métallique submicronique par technologie holographique.

Un problème des nombreuses solutions utilisées pour l'authentification d'objets est celui du lien entre l'objet à protéger et l'élément de protection. Si ce lien n'est pas inamovible et permanent, on risque de voir apparaitre un trafic d'éléments de protection qui peuvent par exemple être récupérés sur des objets en fin de vie ou des invendus pour être apposés sur des objets non authentiques.

Il est aussi nécessaire que la protection de l'objet contre la contrefaçon n'altère pas l'aspect esthétique de l'objet. Il est donc souhaitable de réaliser une protection de petite taille. Il est souhaitable que le marquage soit effectué avec un motif suffisamment fin pour être quasi imperceptible à l'oeil nu.

Il est cependant nécessaire que l'utilisateur puisse lorsqu'il le désire vérifier facilement et si possible sans devoir recourir à un appareil supplémentaire complexe si une pièce est authentique ou non.

Il existe aussi un besoin pour un procédé de fabrication de pièces protégées contre la reproduction qui soit applicable sans surcout important à une large gamme de pièces mécaniques, y compris des pièces de forme complexes telles que par exemple des éléments du mouvement ou de l'habillage d'une montre, etc. Le procédé ne doit pas altérer le fonctionnement mécanique de la pièce, ni modifier sa masse ou son moment d'inertie de façon significative.

### Bref résumé de l'invention

Un but de la présente invention est donc de proposer un procédé de fabrication de pièces difficiles à reproduire qui soit exempt des limitations des procédés ci-dessus, ou qui permette d'atteindre au moins certains des buts mentionnés.

Selon l'invention, ces buts sont atteints notamment au moyen d'un insert pour moule destiné à la fabrication de pièces plastiques et comportant à la fois au moins un motif diffractif obtenu par nanostructuration et au moins une structure micrométrique fine obtenue par photolithographie épaisse.

Cette solution présente notamment l'avantage par rapport à l'art antérieur de garantir la non-reproductibilité de l'insert pour moule, et donc des objets fabriqués dans ce moule, par deux mesures différentes :
- d'une part, l'apposition d'un motif CLR, c'est-à-dire d'un motif tridimensionnel masqué difficile à reproduire, mais dont la présence peut être facilement constatée en l'illuminant au soleil ou de préférence au moyen d'un faisceau de lumière cohérente, par exemple un pointeur laser;
- d'autre part, par la fabrication de la pièce elle-même au moyen d'une technologie qui permet de générer des pièces à la géométrie complexe, difficiles à reproduire avec des technologies d'usinages classiques par enlèvement de copeau ou par électroérosion.

Cette solution permet en outre de marquer des pièces en plastique moulées, y compris des pièces de grandes dimensions, de précision, avec un motif CLR. Il est donc possible d'apposer un tel motif CLR sur des pièces qui seraient difficiles à marquer autrement.

De manière avantageuse, l'insert pour moule comporte un ou plusieurs motifs diffractifs prévus sur la face avant de l'insert et/ou dans une ou plusieurs cavités.

Egalement de manière avantageuse, les motifs micrométriques sont en creux ou en relief et étagés sur un ou plusieurs niveaux.

L'insert pour moule est destiné à être placé dans un moule d'injection, de manière à ce que la surface de l'insert soit reproduite en négatif dans l'objet ainsi moulé. L'insert pour moule peut aussi être constitué par un moule complet, ou une partie de moule complet.

L'invention concerne également un procédé de fabrication d'inserts pour moules comportant les étapes suivantes :
a) nanostructuration d'un motif CLR;
e) déposition d'une couche conductrice par-dessus le substrat respectivement par-dessus les portions de couche diffractive qui subsistent;
f) déposition d'une couche de résine photosensible ;
g) illumination de ladite couche de résine photosensible au travers d'un photomasque, de manière à supprimer sélectivement des portions de ladite résine photosensible ;
h) déposition de matière par électroformage au-dessus de ladite couche conductrice, entre les portions subsistantes de deuxième résine photosensible ;
i) libération de l'insert par enlèvement au moins de la deuxième résine photosensible.

Durant le procédé de fabrication, la phase de nanostructuration A) comporte de préférence les étapes suivantes :
A') déposition d'une première couche de résine photosensible;
   b) illumination de ladite première couche de résine photosensible au travers d'un premier photomasque , de manière à supprimer sélectivement des portions de ladite résine photosensible ;
   c) gravure aux endroits non recouverts par ladite première couche de résine photosensible;
   d) suppression de la première couche de résine photosensible.

De manière avantageuse, la phase de nanostructuration est effectuée au moyen d'un procédé de type « NIL » (« nanoimprintlithography »).

Egalement de manière avantageuse, la première couche de résine photosensible est plus fine que la seconde couche de résine photosensible.

Egalement de manière avantageuse, la première couche de résine photosensible est déposée sur un substrat recouvert d'une couche diffractive, ou de type SOI.

Selon une variante avantageuse, la résolution du premier photomasque est inférieure à 10 microns.

Egalement de manière avantageuse, le premier photomasque permet de faire subsister une ou plusieurs portions non contiguës de couches diffractives, la surface de chaque portion étant inférieure à 4mm².

Selon une autre variante avantageuse, le gravage permet de créer un motif CLR.

Selon encore une autre variante avantageuse, le substrat est en verre, en semiconducteur ou en métal et l'étape de libération de l'insert comporte une étape d'enlèvement du substrat.

Egalement de manière avantageuse, la couche diffractive est déposée sur un substrat recouvert d'une couche conductrice, elle-même sélectivement recouverte d'une troisième couche de résine photosensible.

L'invention prévoit également une pièce plastique obtenue par un procédé de moulage par injection ou pressage comportant des motifs diffractifs nano-structurés et des motifs micrométriques.

Les motifs correspondent de préférence aux motifs d'un insert pour moule tel que préalablement décrit.

Enfin, l'invention prévoit un moule pour fabrication de pièces plastiques par injection ou pressage, comportant un insert tel que préalablement décrit.

La protection provient au moins en partie du fait que la reproduction d'un moule pour la contrefaçon nécessite impérativement l'accès ou la reproduction de deux photomasques distincts - l'un pour la fabrication de l'insert par la technologie LIGA, l'autre pour le motif tridimensionnel CLR. La réalisation de tels photomasques implique des coûts importants qui ne se justifient pas pour un contrefacteur souhaitant réaliser un nombre de reproductions limité et qui ne dispose en général pas de la technologie LIGA nécessaire.

L'utilisation d'une étape distincte pour la réalisation du motif CLR permet notamment de réaliser un insert avec motif CLR beaucoup plus fin que ce qui pourrait être obtenu si l'insert était réalisé avec la seule technologie LIGA. En particulier, il est possible de réaliser ainsi un motif d'épaisseur parfaitement contrôlée, indépendante de l'épaisseur d'une couche de résine à appliquer, permettant ainsi de réaliser des motifs diffractifs dépendant de la longueur d'onde de la lumière réfléchie, et qui seraient impossibles à réaliser en LIGA ou avec d'autres techniques conventionnelles.

Par motif CLR, on entend dans le texte un motif « covert laser readable », c'est-à-dire un motif caché, pratiquement invisible à l'oeil nu et dont la présence peut être constatée lorsque ce motif est illuminé avec un laser da manière à ce que les interférences entre la lumière réfléchie à différentes distances génère une image qui n'existe pas dans le motif CLR apposé.

Selon une caractéristique de l'invention, le motif CLR est donc réalisé en premier, avant de réaliser l'insert sur laquelle ce motif est apposé.

### Brève description des figures

Des exemples de mise en oeuvre de l'invention sont indiqués dans la description illustrée par les figures annexées dans lesquelles :
La figure 1 illustre une première étape du procédé de l'invention.
La figure 2 illustre une deuxième étape du procédé de l'invention.
La figure 3 illustre une troisième étape du procédé de l'invention.
La figure 4 illustre une quatrième étape du procédé de l'invention.
La figure 5 illustre une cinquième étape du procédé de l'invention.
La figure 6A illustre une sixième étape du procédé de l'invention.
La figure 6B illustre une variante de réalisation dans laquelle la couche diffractive est constituée de plusieurs niveaux.
La figure 7 illustre une septième étape du procédé de l'invention.
La figure 8 illustre une huitième étape du procédé de l'invention.
La figure 9A illustre une neuvième étape du procédé de l'invention.
La figure 9B illustre une variante dans laquelle la couche de résine photosensible est utilisée pour fournir une inscription.
La figure 9C illustre une variante dans laquelle une couche de résine photosensible épaisse définit l'insert et une couche de résine photosensible fine définit une inscription.
La figure 10 illustre une dixième étape du procédé de l'invention.
La figure 11 illustre une onzième étape du procédé de l'invention.
La figure 12 illustre une douzième étape du procédé selon un deuxième mode de réalisation de l'invention.
La figure 13 illustre une première étape du procédé selon un deuxième mode de réalisation de l'invention.
La figure 14 illustre une troisième étape du procédé selon un deuxième mode de réalisation de l'invention.
La figure 15 illustre une quatrième étape du procédé selon un deuxième mode de réalisation de l'invention.
La figure 16 illustre une cinquième étape du procédé selon un deuxième mode de réalisation de l'invention.
La figure 17 illustre une sixième étape du procédé selon un deuxième mode de réalisation de l'invention.
La figure 18 illustre une septième étape du procédé selon un deuxième mode de réalisation de l'invention.
La figure 19 illustre une huitième étape du procédé selon un deuxième mode de réalisation de l'invention.
La figure 20 illustre une neuvième étape du procédé selon un deuxième mode de réalisation de l'invention.
La figure 21 illustre une dixième étape du procédé selon un deuxième mode de réalisation de l'invention.
La figure 22 illustre une onzième étape du procédé selon un deuxième mode de réalisation de l'invention.
La figure 23 illustre une douzième étape du procédé selon un deuxième mode de réalisation de l'invention.
La figure 24 illustre une treizième étape du procédé selon un deuxième mode de réalisation de l'invention.
La figure 25 illustre un insert avec ses caractéristiques CLR et des croix suisses définies par technologie LIGA.
La figure 26 illustre un insert avec ses caractéristiques CLR.
La figure 27 illustre un insert dont la structure CLR se trouve au fond de la cavité LIGA.
La figure 28 illustre un insert avec une seule structuration CLR.
La figure 29 illustre l'implémentation d'un insert CLR-LIGA dans un moule d'injection plastique.
La figure 30 illustre un insert dont le motif LIGA est un relief.

### Exemple(s) de mode de réalisation de l'invention

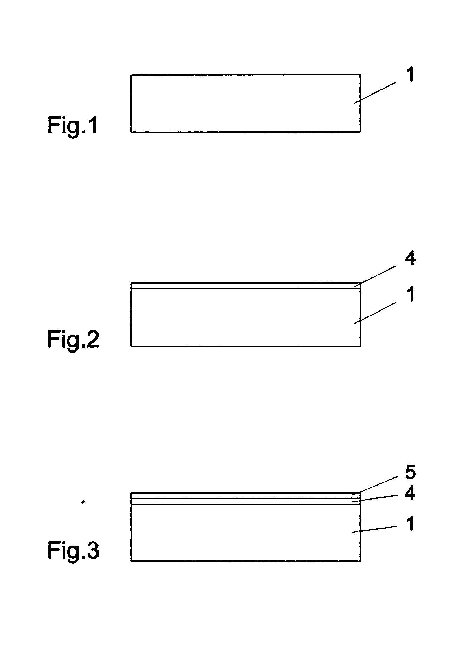

Un premier mode de réalisation de l'invention va être décrit à l'aide des figures 1 à 11. Les dessins sont schématiques uniquement et les proportions ne sont pas nécessairement exactes.

Sur la figure 1, un substrat planaire est préparé, par exemple un substrat de verre, de silicium, de métal etc. Le substrat planaire peut être de forme carrée , rectangulaire mais de préférence il sera rond.

Sur la figure 2, une première couche 4 est déposée sur ce substrat, par exemple une couche d'oxyde de silicium produite par oxydation, une couche d'aluminium, etc. La couche 4 peut être une couche diffractive,la caractéristique diffractive étant obtenue par sa hauteur subsistante après gravure. L'épaisseur de cette couche est contrôlée avec précision et correspond de préférence au quart de la longueur d'onde de la lumière pour laquelle le motif CLR est destiné.

Dans une variante de l'invention, un substrat de type SOI est utilisé qui permet d'éviter l'étalement d'une première couche 4 sur un substrat, étant dit que le substrat SOI est déjà un assemblage d'une fine couche de silicium sur une couche d'oxyde enterrée dans un substrat en silicium.

Dans l'étape suivante illustrée sur la figure 3, une première couche de résine photosensible 5 (photoresist) est déposée. Cette couche est avantageusement fine, de préférence inférieure à 2 µm.

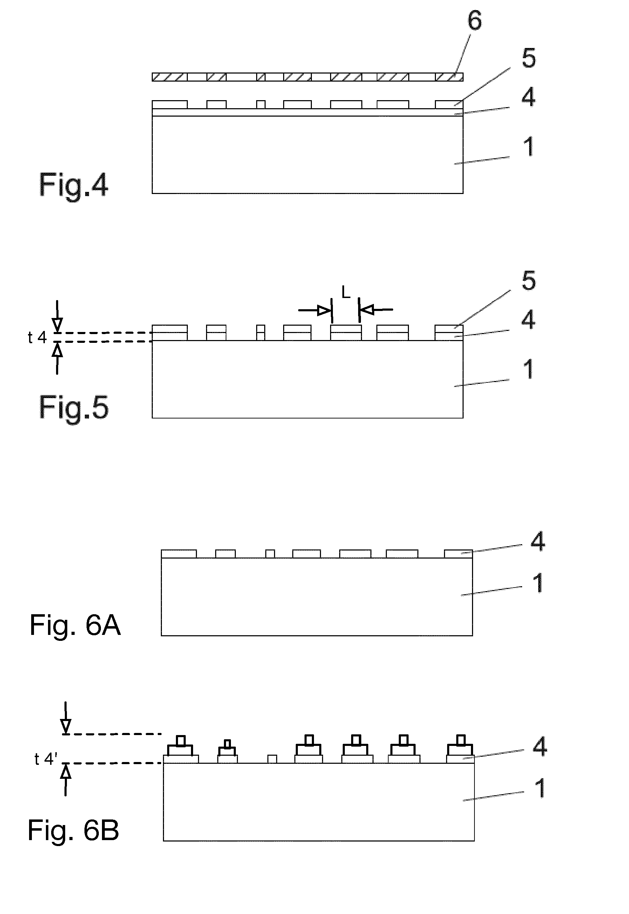

Dans l'étape suivante illustrée sur la figure 4, cette couche de résine photosensible 5 est illuminée au travers d'un premier photomasque 6, à l'aide d'une lumière ultraviolette, visible, de rayons X etc. Le photomasque 6 comporte des ouvertures permettant aux ondes électromagnétiques d'atteindre la résine photosensible 5 pour dupliquer le motif du masque, afin de pouvoir ensuite attaquer chimiquement la résine et la supprimer aux endroits exposés. La résine subsiste sous les portions opaques du photomasque. La résolution du premier photomasque 6, c'est-à-dire la taille minimale des ouvertures ou la distance entre deux ouvertures, est avantageusement inférieure à 10 microns. Le photomasque 6 comporte avantageusement de larges ouvertures délimitant une ou plusieurs portions non contiguës, la taille de chaque portion étant inférieure à 4 mm², de préférence de 1mm² +- 20%. La surface totale du substrat, ainsi que la surface de chaque insert, peut être largement supérieure à la surface de la ou des portions, en sorte que ces portions peuvent n'occuper qu'une portion limitée de la face supérieure de chaque insert. Dans un exemple, la surface de chaque insert est supérieure à 10mm². Chaque portion comporte un motif correspondant à un marquage de type CLR, c'est-à-dire un motif de diffraction permettant de faire apparaitre une image ou un texte sur la pièce plastique injectée grâce à l'insert lorsque celle-ci est illuminée. Les différents motifs peuvent être identiques ou différents les uns des autres.

Dans l'étape suivante illustrée sur la figure 5, la couche diffractive 4 est gravée aux endroits non protégés par la résine 5. La résine 5 est ensuite retirée au cours de l'étape illustrée sur la figure 6A, de manière à laisser subsister une ou plusieurs portions avec des motifs CLR en bosse de couche diffractive 4 sur le substrat 1.

La dimension t4 montre l'épaisseur de la couche diffractive 4, sensiblement égale à λ/4 dans cet exemple. Dans cet exemple, on utilise avantageusement un laser de longueur d'onde (λ) compris entre 130 et 900 nm. Comme on le voit, l'épaisseur de cette couche est indépendante de l'épaisseur de la couche de photorésist 5 préalablement déposée puis reti rée.

La figure 6B montre une variante de réalisation dans laquelle la couche diffractive 4 est constituée de plusieurs niveaux (trois niveaux dans cet exemple). Ces niveaux sont avantageusement réalisés par étapes successives, tel que préalablement décrit pour l'exemple de la figure 6A avec un seul niveau.

Un agencement à plusieurs niveaux permet une plus grande souplesse pour la réalisation du motif projeté. Par exemple, dans certaines réalisations à un seul niveau, il est possible que l'image projetée soit polluée par une image miroir également projetée. L'utilisation de plusieurs niveaux permet de compenser cet effet, en général non souhaité. L'épaisseur totale des multiples niveaux correspond avantageusement à environ λ/4, soit trois niveaux d'environ λ/12 chacun. Un nombre de niveaux différents peut être utilisé.

Dans une variante non illustrée, la structure CLR illustrée sur la figure 6A ou celle illustrée sur la figure 6B est obtenue directement par une technologie de type NIL (« nanoimprint lithography »), c'est-à-dire par emboutissage d'un polymère sur un substrat à l'aide d'un tampon à très haute résolution réalisé préalablement, par exemple par gravure plasma et/ou chimique.

De manière optionnelle, il est possible de personnaliser ce motif, par exemple en supprimant sélectivement une ou plusieurs bosses de la couche diffractive, afin de créer un motif individuel sur chaque pièce ou sur différentes séries sans devoir modifier le premier photomasque 6.

Le motif obtenu jusque-là et illustré sur les figures 6A et 6B est appelé « motif CLR », parce que sa géométrie correspond à celle du motif CLR que l'on souhaite réaliser. On notera cependant que la surface en creux et en bosse qui apparait sur cette figure n'est pas celle qui sera utilisée dans la pièce finale, mais qu'elle sert uniquement à la fabrication de cette pièce finale. Le motif CLR en surface de la pièce intermédiaire illustrée sur les figures 6A et 6B n'a donc pas besoin d'être particulièrement réfléchissant.

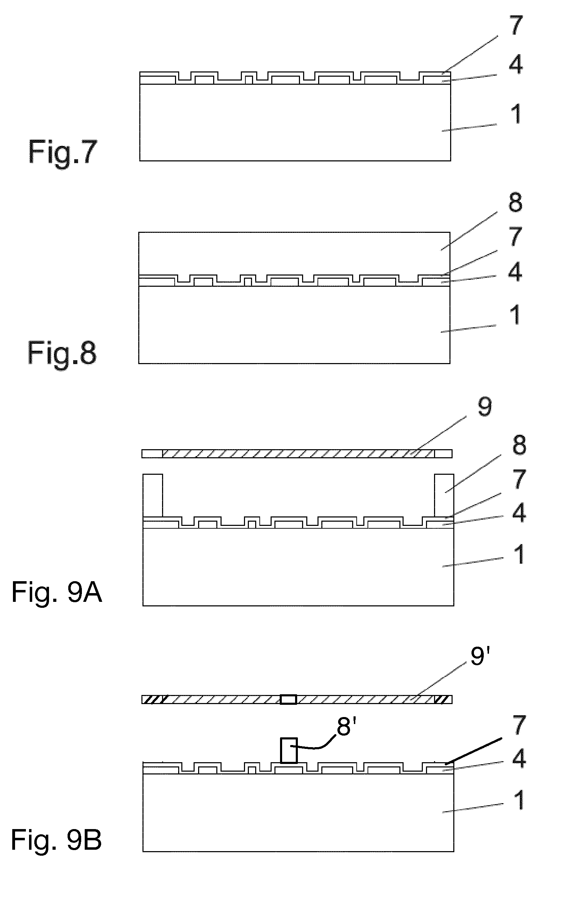

Ce motif CLR est ensuite recouvert d'une couche conductrice 7, par exemple une couche de chrome, d'or etc (figure 7).

Une deuxième couche de résine photosensible 8 est ensuite déposée sur cette couche 7 (Figure 8). Cette couche est avantageusement nettement plus épaisse que la première couche de résine 5, par exemple entre 100 et 1500 microns. Son épaisseur détermine l'épaisseur de l'insert.

Selon la figure 9A, la deuxième couche de résine photosensible 8 est ensuite illuminée au travers d'un deuxième photomasque 9 au moyen de lumière visible, ultraviolette ou de rayons X par exemple. Les ouvertures dans le deuxième photomasque déterminent le contour de la ou des inserts fabriqués.

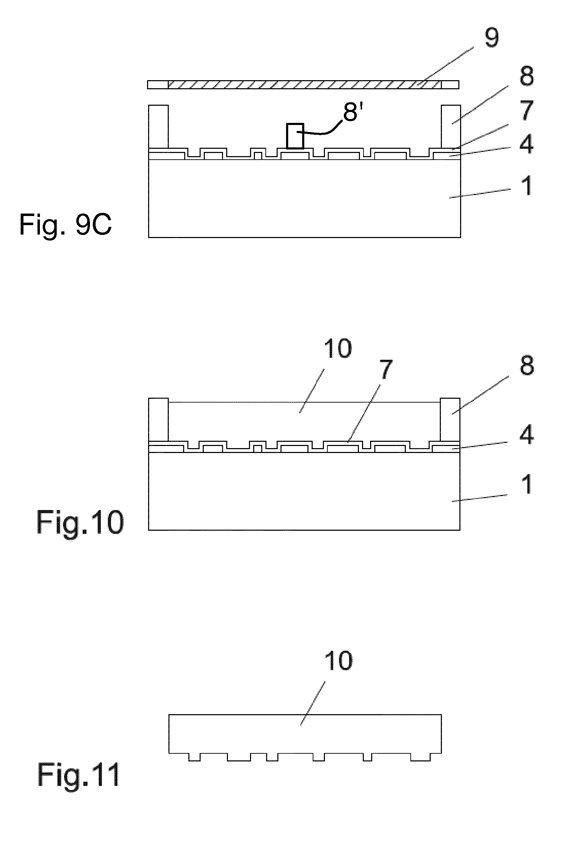

Les figures 9B et 9C illustrent une variante dans laquelle une couche de résine photosensible 8' a tout d'abord été illuminée avec un photomasque 9' sur la figure 9B, tandis qu'une deuxième couche de résine photosensible 8 d'épaisseur différente à celle de la couche 8' est ensuite illuminée avec un deuxième photomasque 9. La couche moins épaisse 8' peut être déposée avant la couche plus épaisse 8, comme illustré ; avantageusement, la couche moins épaisse 8' est toutefois déposée après la couche plus épaisse 8. La couche moins épaisse 8' peut être utilisée pour fournir une inscription ou motif, comme par exemple une référence de pièce, un numéro de série, un logo, une marque, etc., avantageusement directement visible sans éclairage spécifique. Ce motif visible sur ou autour de la surface CLR peut ainsi être réalisé par technique LIGA, par exemple sous la forme d'un trou borgne. L'utilisation de telles inscriptions visibles en plus du motif CLR invisible permet l'obtention d'un deuxième niveaux de sécurisation.

Selon la figure 10, les volumes entres les portions de deuxième résine 8 qui subsistent après l'illumination au travers du deuxième photomasque 9 sont ensuite remplies de métal, par exemple d'or, de cuivre, de nickel, d'un alliage de nickel, ou d'un autre matériau, par une opération d'électroformage (galvanisation par électrodéposition), sur toute l'épaisseur de la couche de résine subsistante.

Le métal 10 électroformé peut ensuite être rectifié,percé ou subir toute sorte d'opération d'usinage.

Comme illustré sur la figure 11, la pièce 10, ou les pièces sur un même substrat, sont ensuite libérées en enlevant la résine 8, le substrat 1, la couche diffractive 4 et la couche conductrice 7. Il subsiste ainsi une pièce 10 dont la face inférieure sur la figure est munie d'au moins une portion avec un motif en relief déterminé par le premier photomasque 6, de manière à constituer un motif CLR invisible ou peu visible à l'oeil nu, mais dont la présence peut être très facilement constatée en illuminant la pièce avec une source de lumière cohérente, par exemple un simple pointeur laser.

La pièce ainsi réalisée est un insert destiné à être placé dans un moule d'injection pour la fabrication de pièces en plastique moulé ou injecté. Il est aussi possible de réaliser directement un moule ou une portion de moule. Le motif CLR su la pièce réalisée est reproduit en négatif sur la surface de la pièce moulée. L'utilisation d'un insert en LIGA, ou avec une technologie similaire, permet en outre de fabriquer des inserts de forme précise et complexe, et donc de mouler des motifs visibles et invisibles très difficiles à reproduire.

La protection de la pièce contre la contrefaçon est obtenue par deux moyens distincts :
- D'une part, le motif CLR appliqué grâce au premier photomasque 6 est difficile à reproduire. Même en connaissant l'image qui doit être réfléchie par ce motif, il est difficile de calculer le motif qui doit être gravé. La fabrication elle-même requiert des technologies rarement disponibles chez les contrefacteurs.
- D'autre part, la fabrication par la technique LIGA c.à.d. par photolithographie et électroformage, dans les volumes déterminés par les photomasques 9 et/ou 9' permettent de réaliser des pièces avec un contour très complexes, difficiles ou même impossible à produire avec des technologies d'usinage classiques par enlèvement de copeaux, électroérosion ou la découpe laser. Avantageusement, cette pièce comporte par exemple des ouvertures de forme complexe, afin de rendre la reproduction difficile pour le contrefacteur dépourvu de l'équipement adéquat.

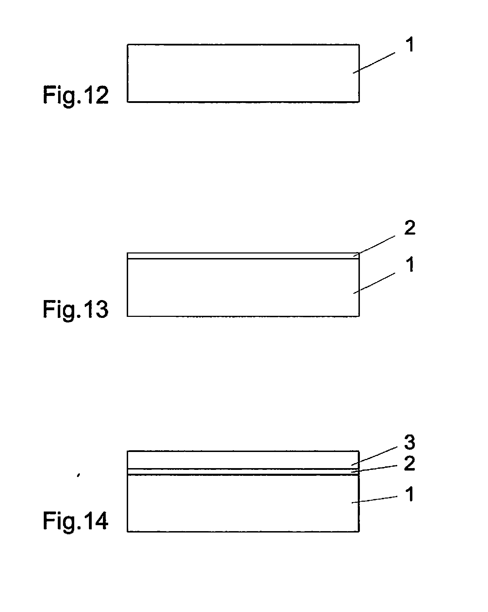

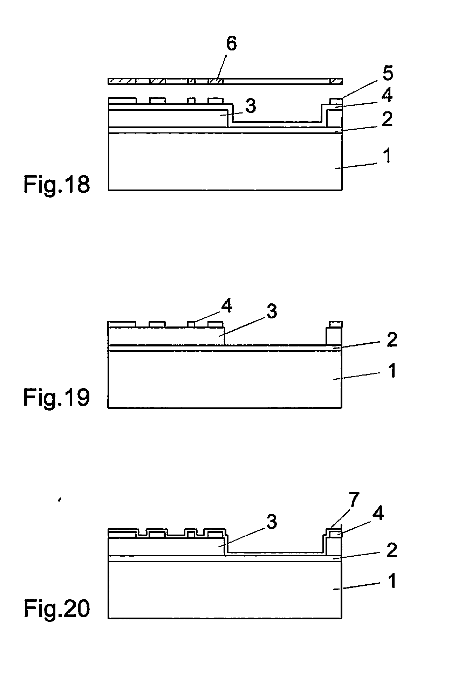

Les figures 12 à 24 illustrent un deuxième mode de réalisation de l'invention permettant de réaliser des pièces avec plusieurs niveaux définis par au moins un (quatrième) photomasque 11 et un motif CLR défini par le premier photomasque 6.

Selon la figure 13, une couche conductrice 2 est déposée sur un substrat 1 en silicium, verre, métal etc. Une couche de résine photosensible 3 est ensuite déposée au cours de l'étape illustrée sur la figure 14. L'épaisseur de cette couche 3 détermine les différences de niveau de la pièce finale ; elle peut être par exemple entre 10 et 1000 microns.

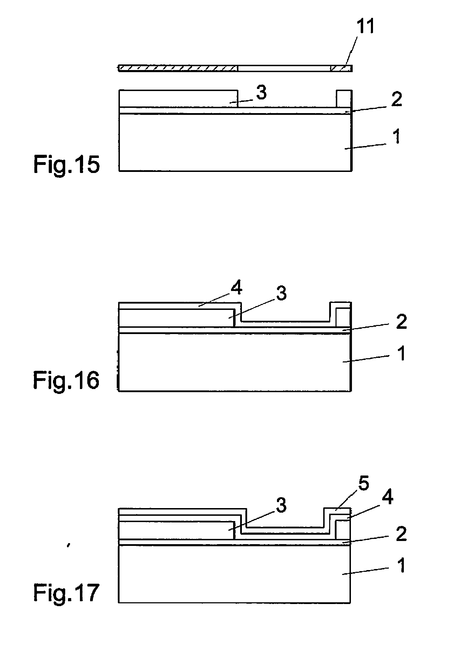

La couche de résine photosensible 3 est ensuite illuminée au travers d'un troisième masque 11 dont les ouvertures déterminent le premier niveau de la pièce finale (figure 15). Il en résulte un substrat 1 recouvert d'une couche conductrice 2 ainsi que, sélectivement, de portions de résine 3.

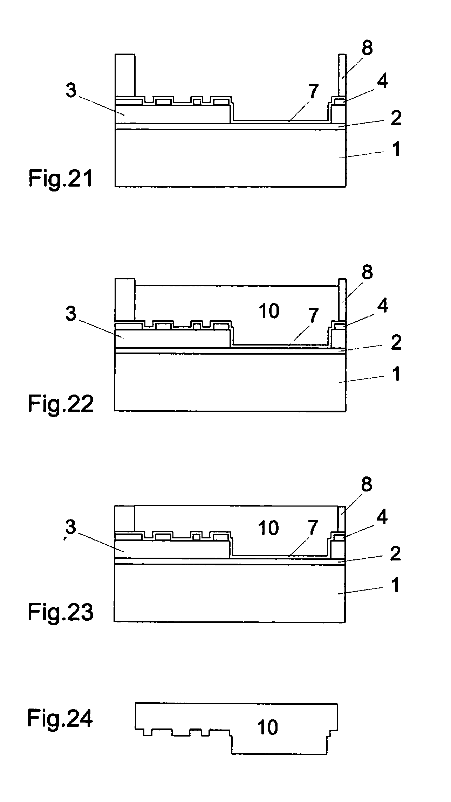

Les étapes suivantes illustrées sur les figures 16 à 24 correspondent aux étapes correspondantes des figures 1 à 11, permettant tout d'abord de créer sur le substrat résultant de la figure 15 un ou plusieurs motifs CLR, puis de faire croitre par électroformage au-dessus de ce motif un ou plusieurs inserts 10. La pièce résultante 10, illustrée sur la figure 24, comporte donc plusieurs niveaux, dans cet exemple deux niveaux, dont l'un au moins est muni d'un motif CLR.

L'insert ainsi fabriqué en technologie CLR-LIGA est intégré dans un moule d'injection standard. L'insert réalisé en technologie CLR-LIGA est difficilement reproductible.

La pièce plastique qui résulte du procédé d'injection aura les caractéristiques d'authentification gravée dans l'insert CLR-LIGA

L'insert CLR-LIGA comporte des éléments diffractifs nano-gravés et des structures micrométriques réalisées par technologie LIGA.

Les éléments diffractifs sont de types CLR (Covert Laser Readable) : le motif est illuminé avec un laser, rendant le motif lisible. Le relief des structures CLR aura une hauteur typique de 10 nm à 1 000 nm. Ces structures peuvent comporter plusieurs étages.

Les structures micrométriques de type LIGA résultent des opérations de photolithographie épaisse et d'électroformage. Ces structures ont des hauteurs typiquement de 50 µm à 1000 µm. Ces structures peuvent comporter un ou plusieurs étages. Ces structures peuvent conférer des propriétés d'authentification en creux ou en relief dans la pièce plastique.

L'authentification du composant plastique se fait par une observation visuelle ou au microscope de la structure micrométrique et avec l'usage d'un pointeur laser appliqué sur le motif CLR. Le faisceau laser diffracte sur le motif CLR et projette un authentifiant sur une surface quelconque.

La partie plastique authentifiée sera localisée de préférence dans une zone rentrante du composant. Ceci afin de préserver les surfaces diffractives de rayures.

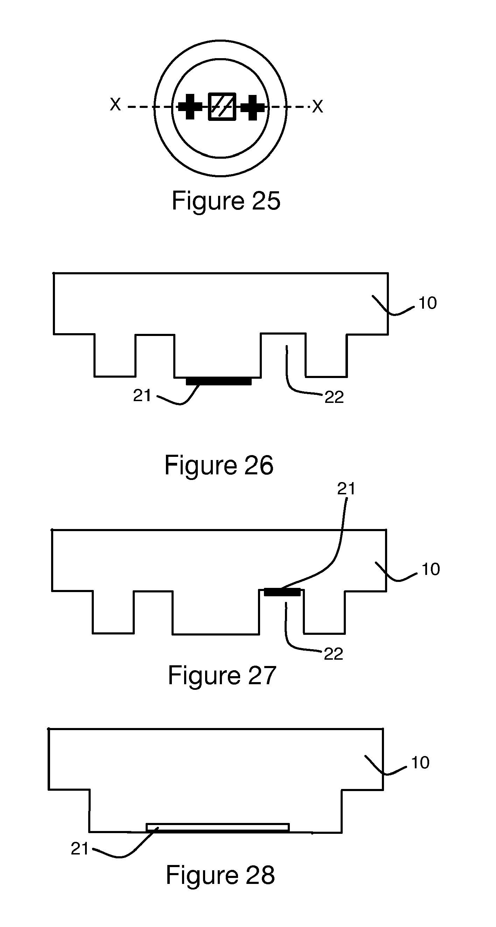

La figure 26 montre un insert 10 avec ses caractéristiques CLR 21 et des croix suisses 22 définies par technologie LIGA tel que montré à la figure 25. Sur cette illustration l'insert est rond mais il peut être de toute forme. L'épaisseur de l'insert sera typiquement comprise entre 0.3 mm et 3 mm. La profondeur de la cavité ou du relief LIGA sera typiquement compris entre 50 mu et 1 000 mu. Le relief des structures CLR aura une hauteur typique de 10 nm à 1 000nm.

La figure 27 illustre un insert où la structure CLR 21 se trouve au fond de la cavité LIGA 22.

La figure 28 illustre un insert où il n'y a qu'une structuration CLR 21.

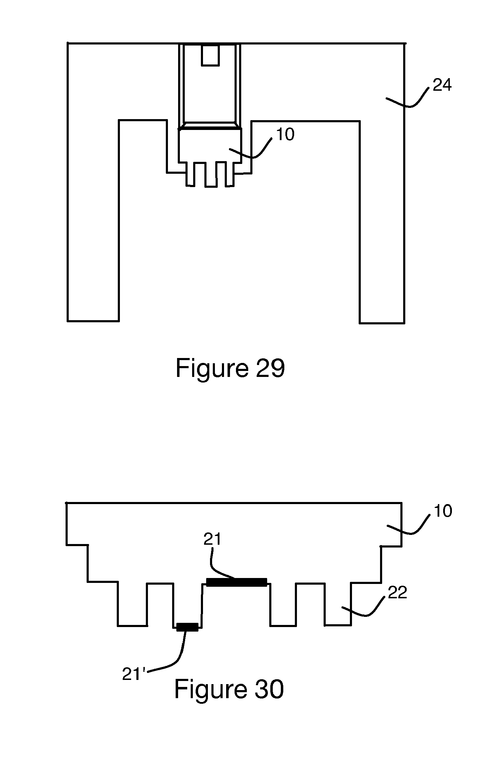

La figure 30 illustre un insert dans lequel le motif LIGA n'est pas une cavité mais un relief. Le motif CLR peut se trouver indifféremment dans la cavité 21 ou sur la structure LIGA 21'.

La figure 29 illustre l'implémentation d'un insert CLR-LIGA dans un moule d'injection plastique. Comme l'insert est « dépassant » dans le moule, le composant plastique aura une inscription « rentrante ».

La fabrication de ces inserts combinent des technique de nano-fabrication de couches fines et la technologie LIGA.

Les techniques de nano-fabrication permettent de réaliser les motifs CLR. Ces motifs sont réalisés de préférence sur un substrat rond en silicium, en verre ou en métal. Dans un mode avancé, on réalise ces motifs CLR sur des reliefs photofabriqués.

La technique LIGA permet de réaliser par photolithographie épaisse le positif du motif à réaliser. Puis l'électroformage sur ce positif crée un insert comprenant une cavité 22 et le motif CLR 21 (figure 26).

## Revendications

1. Insert électroformé pour moule destiné à la fabrication de pièces plastiques **caractérisé en ce qu'**il comporte à la fois au moins un motif diffractif obtenu par nanostructuration et au moins une structure micrométrique fine obtenue par photolithographie épaisse.

2. Insert électroformé pour moule selon la revendication 1 comportant un ou plusieurs motifs diffractifs prévus sur la face avant de l'insert et/ou dans une ou plusieurs cavités.

3. Insert électroformé pour moule selon l'une des revendications 1 ou 2 **caractérisé en ce que** les motifs micrométriques sont en creux ou en relief et étagés sur un ou plusieurs niveaux.

4. Procédé de fabrication d'inserts pour moules comportant les étapes suivantes :
a) nanostructuration d'un motif CLR sur un substrat;
e) déposition d'une couche conductrice (7) par-dessus le substrat respectivement par-dessus des portions de couche diffractive (4) sur ce substrat ;
f) déposition d'une couche de résine photosensible (8) ;
g) illumination de ladite couche de résine photosensible (8) au travers d'un photomasque (9), de manière à supprimer sélectivement des portions de ladite résine photosensible (8) ;
h) déposition de matière (10) par électroformage au-dessus de ladite couche conductrice (7), entre les portions subsistantes de deuxième résine photosensible (8) ;
i) libération de l'insert (10) par enlèvement au moins de la deuxième résine photosensible (8).

5. Procédé selon la revendication 4, dans lequel la phase de nanostructuration A) comporte les étapes suivantes :
A') déposition d'une première couche de résine photosensible (5);
b) illumination de ladite première couche de résine photosensible au travers d'un premier photomasque (6), de manière à supprimer sélectivement des portions de ladite résine photosensible ;
c) gravure aux endroits non recouverts par ladite première couche de résine photosensible (5);
d) suppression de la première couche de résine photosensible (5).

6. Procédé selon la revendication 4, dans lequel la phase de nanostructuration est effectuée au moyen d'un procédé de type « NIL » (« nanoimprintlithography »).

7. Procédé selon la revendication 5, la première couche de résine photosensible (5) étant plus fine que la seconde couche de résine photosensible (8).

8. Procédé selon l'une des revendications 5 ou 7, ladite première couche de résine photosensible étant déposée sur ledit substrat (1) recouvert d'une couche diffractive (4).

9. Procédé selon l'une des revendications 5 ou 7, ladite première couche de résine photosensible étant déposée sur un substrat (1) de type SOI.

10. Procédé selon l'une des revendications 5 ou 7 à 9, dans lequel la résolution dudit premier photomasque (6) est inférieure à 10 microns.

11. Procédé selon l'un des revendications 5 ou 7 à 10, dans lequel ledit premier photomasque (6) permet de faire subsister une ou plusieurs portions non contiguës de couches diffractives, la surface de chaque portion étant inférieure à 4mm².

12. Procédé selon l'une des revendications 4, 5 ou 7 à 11, dans lequel la gravure permet de créer un motif CLR.

13. Procédé selon l'une des revendications 4, 5, ou 7 à 12, dans lequel ledit substrat (1) est en verre, en semiconducteur ou en métal ;
ladite étape de libération de l'insert (10) comportant une étape d'enlèvement dudit substrat.

14. Procédé selon l'une des revendications 4 à 13, comportant la déposition d'une troisième couche de résine photosensible (8') d'épaisseur inférieure à ladite deuxième couche de résine photosensible (8), puis l'illumination de ladite troisième couche de résine photosensible (8') au travers d'un troisième photomasque (9'), de manière à supprimer sélectivement des portions de ladite troisième couche de résine photosensible (8') et à réaliser ainsi un trou borgne dans la pièce.

15. Procédé selon l'une des revendications 8 à 14, dans lequel ladite couche diffractive (4) est déposée sur ledit substrat (1) recouvert d'une couche conductrice (2), elle-méme sélectivement recouverte d'une troisième couche de résine photosensible (3).

16. Pièce plastique obtenue par un procédé de moulage par injection ou pressage **caractérisée en ce qu'**elle comporte des motifs diffractifs nano-structurés et des motifs micrométriques.

17. Pièce plastique selon la revendication 16, dans laquelle les motifs correspondent aux motifs d'un insert pour moule selon l'une des revendications 1 à 3.

18. Moule pour fabrication de pièces plastiques par injection ou pressage, comportant un insert selon l'une des revendications 1 à 3.
